# EUROPEAN PATENT SPECIFICATION

(11) **EP 4 189 024 B1**
(45) Date of publication and mention of the grant of the patent: **29.05.2024**
(21) Application number: 21752009.7
(22) Date of filing: 26.07.2021
(51) Int. Cl.: C09D 183/14

(54) **POLYSILAZANE POLYBUTADIENE HYBRID COATING COMPOSITION**
POLYSILAZAN-POLYBUTADIEN-HYBRIDBESCHICHTUNGSZUSAMMENSETZUNG
COMPOSITION DE REVÊTEMENT HYBRIDE DE POLYSILAZANE-POLYBUTADIÈNE

(30) Priority: 28.07.2020 EP 20188205
(43) Date of publication of application: 07.06.2023
(73) Proprietor: Merck Patent GmbH, 64293 Darmstadt (DE)
(72) Inventor: GROTTENMUELLER, Ralf, 64293 DARMSTADT (DE); NELL, Sergej, 64293 DARMSTADT (DE)
(74) Representative: Merck Patent Association
(86) International application number: PCT/EP2021/070782
(87) International publication number: WO 2022/023234

(56) References cited:
- WO-A1-2016/169631
- WO-A1-2017/071788
- WO-A1-2020/120006
- CN-A- 108 410 177

## Description

### Technical field

The present invention relates to polysilazane polybutadiene hybrid coating compositions which are based on a silazane polymer and a specific functionalized butadiene polymer. The coating compositions are particularly suitable for the preparation of functional surface coatings on various base material substrates to provide improved physical and/or chemical surface properties such as, in particular, improved mechanical resistance and durability (including improved surface hardness, improved scratch resistance and/or improved abrasion resistance); improved wetting and adhesion properties (including hydro- and oleophobicity, easy-to-clean effect and/or anti-graffiti effect); improved chemical resistance (including improved corrosion resistance (e.g. against solvents, acidic and alkaline media and corrosive gases) and/or improved anti-oxidation effect); and improved physical barrier or sealing effects. Beyond that, functional surface coatings prepared from the coating compositions of the present invention show particularly good flexibility, thereby enabling crack-free coatings with high layer thickness of up to 50 µm.

In addition, further beneficial surface properties may be obtained or may be improved by functional coatings which are prepared from the coating composition according to the present invention such as, e.g. antistatic effect, anti-staining effect, anti-fingerprint effect, anti-fouling effect, anti-microbial effect, and/or smoothening effect.

Furthermore, the coating compositions show high adhesion to various substrate surfaces and they allow an easy application by user-friendly coating methods so that functional surface coatings with various film thicknesses may be obtained in an efficient and easy manner under mild conditions.

The present invention further relates to a method for preparing a coated article using said coating composition and to a coated article which is prepared by said method. There is further provided for the use of said composition for forming a functional coating on the surface of a base material, thereby improving one or more of the above-mentioned specific surface properties.

### Background of the invention

Polymers with silazane repeating units -[SiR₂-NR'-] are typically referred to as polysilazanes. If all substituents R and R' are hydrogen, the material is called perhydropolysilazane (PHPS) and, if at least one of R and R' is an organic moiety, the material is called organopolysilazane (OPSZ). PHPS and OPSZ are used for a variety of functional coatings to impart certain properties to surfaces, such as e.g. anti-graffiti effect, scratch resistance, corrosion resistance or hydro- and oleophobicity. Hence, silazanes are widely used for functional coatings for various applications.

Whilst polysilazanes are composed of one or more different silazane repeating units, polysiloxazanes additionally contain one or more different siloxane repeating units. Polysiloxazanes combine features of polysilazane and polysiloxane chemistry and behavior. Polysilazanes and polysiloxazanes are resins that are used for the preparation of functional coatings for different types of application.

Typically, both polysilazanes and polysiloxazanes are liquid polymers which become solid at molecular weights of ca. > 10,000 g/mol. In most applications, liquid polymers of moderate molecular weights, typically in the range from 2,000 to 8,000 g/mol, are used. For preparing solid coatings from such liquid polymers, a curing step is required which is carried out after applying the material on a substrate, either as a pure material or as a formulation.

Polysilazanes or polysiloxazanes can be crosslinked by hydrolysis, for example, by reaction with moisture from the air. This leads to an increasing molecular weight and to a solidification or curing of the material. For this reason, the terms "curing" and "crosslinking" and the corresponding verbs "cure" and "crosslink" are interchangeably used as synonyms in the present application when referred to silazane based polymers such as e.g. polysilazanes and polysiloxazanes. Usually, curing is performed by hydrolysis under ambient conditions or at elevated temperatures. Cured polysilazanes show excellent adhesion, high hardness and good scratch resistance.

One of the unique properties of polysilazane based coatings is their high crosslinking density after full curing. As a result, such coatings have high barrier properties, which is important in corrosion protection, and are hard and scratch resistant, but the inevitable disadvantage is that the coating is a brittle film. Hence, only limited film thicknesses of about < 5 to 10 µm, depending on the temperature and other conditions, are possible without crack formation. To overcome the film thickness limitation without deterioration of the other positive effects, hybrid materials prepared from polysilazane and other non-silazane materials were developed. Hybrid materials are to be understood either as simple mixtures or as chemically reacted systems of polysilazanes and non-silazane compounds.

For example, various hybrid materials based on polysilazanes and polyacrylates, (blocked) isocyanates, epoxides, oligomeric or polymeric phenolic compounds or fluorinated polymers have been described in the prior art. Reference is made in this regard to R. Grottenmüller, A. Zych, UV Curable Silazane Resins And Their Applications, Prior Art Publishing 2019, priorartregister.com, DOI: 10.18169/PAPDEOTT008242; WO 2020/120006 A1; unpublished EP application No. 20170454.1; and unpublished PCT application No. PCT/EP2020/058120.

In addition, other more complex hybrid materials based on polysilazanes are known. For example, CN 108410177 A describes a fracture and ageing resistant cable sheath, which is prepared from silicone rubber, chloroprene rubber, butadiene-acrylonitrile rubber, nano silicon dioxide, zinc oxide, white carbon black, polysilazane and various additives. The fracture and ageing resistant cable sheath is said to have improved rubber properties, improved ageing and fracture resistance property and improved service life under outdoor environment conditions.

However, although coatings prepared from the known hybrid materials show advanced properties such as e.g. improved acid resistance, improved flexibility or improved corrosion resistance, they do not satisfy the requirements of modern high-performance functional coatings as regards the combination of high mechanical resistance and durability, high chemical resistance and high film thicknesses of up to 50 µm which can be prepared without crack formation. Hence, disadvantages of coatings prepared from the known hybrid materials are their limited flexibility and film thickness without crack formation. Further drawbacks are that the known hybrid systems often give cloudy coating films and show unsatisfactory results when applied by conventional coating methods, such as, for example, wiping, dip coating, spray coating, spin-coating, etc..

### Object of the invention

Hence, it is an object of the present invention to overcome the disadvantages in the prior art and to provide new coating compositions which are particularly suitable for the preparation of functional surface coatings on various base materials to provide improved physical and/or chemical surface properties such as, in particular, improved mechanical resistance and durability (including improved surface hardness, improved scratch resistance and/or improved abrasion resistance); improved wetting and adhesion properties (including hydro- and oleophobicity, easy-to-clean effect and/or anti-graffiti effect); improved chemical resistance (including improved corrosion resistance (e.g. against solvents, acidic and alkaline media and corrosive gases) and/or improved anti-oxidation effect); and improved physical barrier or sealing effects.

In addition, it is desirable to obtain additional or further improve beneficial surface properties such as, e.g. antistatic effect, anti-staining effect, anti-fingerprint effect, anti-fouling effect, and/or smoothening effect.

Moreover, it is an object of the present invention to provide new coating compositions which, in addition to the above-mentioned advantages, show high adhesion to various substrate surfaces and allow an easy and trouble-free application by user-friendly coating methods so that functional surface coatings with high film thickness can be obtained in an efficient and easy manner under mild conditions, while avoiding unwanted clouding of the prepared coating films.

Beyond that, it is an object of the present invention to provide coating compositions which allow the preparation of functional coatings showing particularly good flexibility thereby enabling crack-free coatings with high layer thickness of up to 50 µm.

It is a further object of the present invention to provide a method for preparing coated articles and coated articles which are prepared by said method and show the above-mentioned advantages.

Finally, it is an object of the present invention to provide coating compositions which can be used for forming functional surface coatings on various base materials to improve one or more of the aforementioned surface properties, specifically surface hardness and scratch resistance, and which show particularly good flexibility, thereby allowing preparation of crack-free coatings with high layer thickness of up to 50 µm.

### Summary of the invention

The present inventors surprisingly found that coating compositions based on silazane polymers and specific functionalized butadiene polymers show a favourable combination of both material properties, namely surface hardness and scratch resistance on the one hand and flexibility and crack-free nature of surface coatings prepared therefrom on the other hand. This enables the preparation of crack-free functional surface coatings with high layer thickness of up to 50 µm.

Taking this into account, the present inventors surprisingly found that the above objects are solved, either individually or in any combination, by a coating composition, comprising:
(i) a silazane polymer; and
(ii) a butadiene polymer;
wherein the butadiene polymer comprises one or more repeating units derived from a substituted or unsubstituted 1,3-butadiene monomer and one or more functional groups selected from -OH or -Si(OR)₃, wherein R is selected from H, alkyl, aryl or aralkyl.

In addition, a method for preparing a coated article is provided, wherein the method comprises the following steps:
(a) applying a coating composition according to the present invention to a surface of an article; and
(b) curing said coating composition to obtain a coated article.

Moreover, a coated article is provided, which is obtainable or obtained by the above-mentioned preparation method.

The present invention further relates to the use of a coating composition according to the present invention for forming a functional coating on a surface of a base material.

Preferred embodiments of the invention are described in the dependent claims.

### Detailed description

### Definitions

The term "polymer" includes, but is not limited to, homopolymers, copolymers, for example, block, random, and alternating copolymers, terpolymers, quaterpolymers, etc., and blends and modifications thereof. Furthermore, unless otherwise specifically limited, the term "polymer" shall include all possible configurational isomers of the material. These configurations include, but are not limited to isotactic, syndiotactic, and atactic symmetries. A polymer is a molecule of high relative molecular mass, the structure of which essentially comprises the multiple repetition of units (i.e. repeating units) derived, actually or conceptually, from molecules of low relative mass (i.e. monomers). Typically, the number of repeating units is higher than 10, preferably higher than 20, in polymers. If the number of repeating units is less than 10, the polymers may also be referred to as oligomers.

The term "monomer" as used herein, refers to a molecule which can undergo polymerization thereby contributing constitutional units (repeating units) to the essential structure of a polymer.

The term "homopolymer" as used herein, stands for a polymer derived from one species of (real, implicit or hypothetical) monomer.

The term "copolymer" as used herein, generally means any polymer derived from more than one species of monomer, wherein the polymer contains more than one species of corresponding repeating unit. In one embodiment the copolymer is the reaction product of two or more species of monomer and thus comprises two or more species of corresponding repeating unit. It is preferred that the copolymer comprises two, three, four, five or six species of repeating unit. Copolymers that are obtained by copolymerization of three monomer species can also be referred to as terpolymers. Copolymers that are obtained by copolymerization of four monomer species can also be referred to as quaterpolymers. Copolymers may be present as block, random, and/or alternating copolymers.

The term "block copolymer" as used herein, stands for a copolymer, wherein adjacent blocks are constitutionally different, i.e. adjacent blocks comprise repeating units derived from different species of monomer or from the same species of monomer but with a different composition or sequence distribution of repeating units.

Further, the term "random copolymer" as used herein, refers to a polymer formed of macromolecules in which the probability of finding a given repeating unit at any given site in the chain is independent of the nature of the adjacent repeating units. Usually, in a random copolymer, the sequence distribution of repeating units follows Bernoullian statistics.

The term "alternating copolymer" as used herein, stands for a copolymer consisting of macromolecules comprising two species of repeating units in alternating sequence.

The term "polysilazane" as used herein, refers to a polymer in which silicon and nitrogen atoms alternate to form the basic backbone. Since each silicon atom is bound to at least one nitrogen atom and each nitrogen atom to at least one silicon atom, both chains and rings of the general formula -[SiR¹R²-NR³-]ₘ (silazane repeating unit) occur, wherein R¹ to R³ may be hydrogen atoms, organic substituents or hetero-organic substituents; and m is an integer. If all substituents R¹ to R³ are hydrogen atoms, the polymer is designated as perhydropolysilazane, polyperhydrosilazane or inorganic polysilazane (-[SiH₂-NH-]ₘ). If at least one substituent R¹ to R³ is an organic or hetero-organic substituent, the polymer is designated as organopolysilazane.

The term "polysiloxazane" as used herein, refers to a polysilazane which additionally contains sections in which silicon and oxygen atoms alternate. Such sections may be represented, for example, by -[O-SiR⁷R⁸-]ₙ, wherein R⁷ and R⁸ may be hydrogen atoms, organic substituents, or hetero-organic substituents; and n is an integer. If all substituents of the polymer are hydrogen atoms, the polymer is designated as perhydropolysiloxazane. If at least one substituents of the polymer is an organic or hetero-organic substituent, the polymer is designated as organopolysiloxazane.

The term "functional coating" as used herein refers to coatings which impart one or more specific properties to a surface. Generally, coatings are needed to protect surfaces or impart specific effects to surfaces. There are various effects which may be imparted by functional coatings. For example, mechanical resistance, surface hardness, scratch resistance, abrasion resistance, anti-microbial effect, anti-fouling effect, wetting effect (towards water), hydro-and oleophobicity, smoothening effect, durability effect, antistatic effect, anti-staining effect, anti-fingerprint effect, easy-to-clean effect, anti-graffiti effect, chemical resistance, corrosion resistance, anti-oxidation effect, physical barrier effect, sealing effect, heat resistance, fire resistance, low shrinkage, UV-barrier effect, light fastness, and/or optical effects.

The term "cure" means conversion to a crosslinked polymer network (for example, through heat or irradiation with or without catalysis).

The term "butadiene polymer" as used herein, relates to a polymer which is formally derived by polymerization from substituted or unsubstituted 1,3-butadiene monomers. Such 1,3-butadiene monomers form 1,4- or 1,2-linked repeating units. Suitable substituted or unsubstituted 1,3-butadiene monomers are, for example, 1,3-butadiene, 2-methyl-1,3-butadiene (isoprene) or 2-chloro-1,3-butadiene (chloroprene). The butadiene polymer can be functionalized at the ends of the main chain and/or side chains. The butadiene polymer may comprise, in addition to the repeating units derived from substituted or unsubstituted 1,3-butadiene monomers, further repeating units which are not derived from substituted or unsubstituted 1,3-butadiene monomers. Such further repeating units may be, for example, repeating units derived from substituted or unsubstituted ethylene monomers.

The term "alkyl" as used herein, means a linear, branched or cyclic alkyl group which may be substituted.

The term "aryl" as used herein, means a mono-, bi- or tricyclic aromatic or heteroaromatic group which may be substituted. Heteroaromatic groups contain one or more heteroatoms (e.g. N, O, S and/or P) in the heteroaromatic system.

The term "aralkyl" as used herein, means any univalent radical derived from an alkyl radical by replacing one or more hydrogen atoms by aryl groups.

### Preferred embodiments

The present invention relates to a coating composition, comprising:
(i) a silazane polymer; and
(ii) a butadiene polymer;
wherein the butadiene polymer comprises one or more repeating units derived from a substituted or unsubstituted 1,3-butadiene monomer and one or more functional groups selected from -OH or -Si(OR)₃, wherein R is selected from H, alkyl, aryl or aralkyl.

### Butadiene polymer

The butadiene polymer is a polymeric compound which comprises one or more repeating units derived from a substituted or unsubstituted 1,3-butadiene monomer and one or more functional groups selected from -OH or -Si(OR)₃, wherein R is selected from H, alkyl, aryl or aralkyl. The butadiene polymer is typically formed by polymerization of one or more substituted or unsubstituted 1,3-butadiene monomer such as, for example, 1,3-butadiene, 2-methyl-1,3-butadiene (isoprene) and/or 2-chloro-1,3-butadiene (chloroprene).

The butadiene monomers may be 1,4- or 1,2-linked to from the butadiene polymer, wherein the type of linkage may vary from repeating unit to repeating unit. The butadiene polymer may be regarded as a functionalized butadiene polymer comprising one or more groups selected from the list consisting of -OH and -Si(OR)₃, wherein R is selected from H, alkyl, aryl or aralkyl. Such functional groups are typically arranged at the ends of the main chain and/or side chains of the butadiene polymer.

Preferably, R is selected from H, alkyl having 1 to 10 carbon atoms, aryl having 2 to 10 carbon atoms or aralkyl having 3 to 20 carbon atoms. More preferably, R is selected from H, methyl, ethyl, propyl, butyl, pentyl, phenyl or -(CH₂)ₓPh, wherein x is an integer from 1 to 10, preferably 1 to 5, more preferably 1, 2 and 3.

In a preferred embodiment of the present invention, the repeating unit derived from a substituted or unsubstituted 1,3-butadiene monomer is represented by Formula (I), Formula (II) or Formula (III):

-[CH₂-CX^{I}=CH-CH₂-] Formula (I)

-[CH₂-CX^{II}(CH=CH₂)-] Formula (II)

-[CH₂-CH(CX^{III}=CH₂)-] Formula (III)

wherein X^{I} is H, halogen or alkyl having 1 to 5 carbon atoms, preferably H, Cl, methyl, ethyl or propyl; X" is H, halogen or alkyl having 1 to 5 carbon atoms, preferably H, Cl, methyl, ethyl or propyl; and X^{III} is halogen or alkyl having 1 to 5 carbon atoms, preferably Cl, methyl, ethyl or propyl.

In a preferred embodiment of the present invention, the butadiene polymer comprises a first and a second repeating unit derived from a substituted or unsubstituted 1,3-butadiene monomer, wherein the first repeating unit is represented by Formula (I) and the second repeating unit is represented by Formula (II):

-[CH₂-CX^{I}=CH-CH₂-] Formula (I)

-[CH₂-CX^{II}(CH=CH₂)-] Formula (II)

wherein X^{I} and X" are the same and selected from H, halogen and alkyl having 1 to 5 carbon atoms, preferably H, Cl, methyl, ethyl and propyl.

It is preferred that the butadiene polymer comprises one or more further repeating units. Preferably, such further repeating unit is not derived from substituted or unsubstituted 1,3-butadiene monomers. More preferably, such further repeating unit is derived from substituted or unsubstituted ethylene monomers.

In a preferred embodiment of the present invention, the further repeating unit is represented by Formula (IV):

-[CH₂-CHR^{a}-] Formula (IV)

wherein R^{a} is selected from cyano, alkyl, aryl or aralkyl, wherein alkyl, aryl or aralkyl may be substituted with one or more substituents. Preferred substituents for said alkyl, aryl or aralkyl are selected from hydroxy, fluorine, cyano, alkoxy or (trialkoxy)silyl groups.

Preferably, R^{a} is selected from cyano, alkyl having 1 to 10 carbon atoms, aryl having 2 to 10 carbon atoms or aralkyl having 3 to 20 carbon atoms, wherein alkyl having 1 to 10 carbon atoms, aryl having 2 to 10 carbon atoms or aralkyl having 3 to 20 carbon atoms are optionally substituted with one or more substituents selected from fluorine, cyano, hydroxy, C1-C5 alkoxy, trihydroxysilyl or tri(C1-C5 alkoxy)silyl groups. More preferably, R^{a} is selected from cyano, methyl, ethyl, propyl, butyl, pentyl, phenyl, -(CH₂)_{y}Ph or -(CH₂)_{z}Si(OR^{b})₃, wherein y is an integer from 1 to 10, preferably 1 to 5, more preferably 1, 2, or 3; z is an integer from 0 to 10, preferably 0 to 5, more preferably 1, 2, 3 or 4; and R^{b} is selected from methyl, ethyl, propyl, butyl, pentyl.

In a more preferred embodiment of the present invention, the butadiene polymer comprises one or more repeating units derived from a substituted or unsubstituted 1,3-butadiene monomer represented by Formula (I),

Formula (II) or Formula (III) and one or more further repeating units represented by Formula (IV):

-[CH₂-CX^{I}=CH-CH₂-] Formula (I)

-[CH₂-CX^{II}(CH=CH₂)-] Formula (II)

-[CH₂-CH(CX^{III}=CH₂)-] Formula (III)

-[CH₂-CHR^{a}-] Formula (IV)

wherein X^{I} is H, halogen or alkyl having 1 to 5 carbon atoms, preferably H, Cl, methyl, ethyl or propyl; X" is H, halogen or alkyl having 1 to 5 carbon atoms, preferably H, Cl, methyl, ethyl or propyl; and X^{III} is halogen or alkyl having 1 to 5 carbon atoms, preferably Cl, methyl, ethyl or propyl; and R^{a} is selected from cyano, alkyl, aryl or aralkyl, wherein alkyl, aryl or aralkyl may be substituted with one or more substituents, which are preferably selected from hydroxy, fluorine, cyano, alkoxy or (trialkoxy)silyl groups.

Preferably, R^{a} is selected from cyano, alkyl having 1 to 10 carbon atoms, aryl having 2 to 10 carbon atoms or aralkyl having 3 to 20 carbon atoms, wherein alkyl having 1 to 10 carbon atoms, aryl having 2 to 10 carbon atoms or aralkyl having 3 to 20 carbon atoms are optionally substituted with one or more substituents selected from fluorine, cyano, hydroxy, C1-C5 alkoxy, trihydroxysilyl or tri(C1-C5 alkoxy)silyl groups. More preferably, R^{a} is selected from cyano, methyl, ethyl, propyl, butyl, pentyl, phenyl, -(CH₂)_{y}Ph or -(CH₂)_{z}Si(OR^{b})₃, wherein y is an integer from 1 to 10, preferably 1 to 5, more preferably 1, 2, or 3; z is an integer from 0 to 10, preferably 0 to 5, more preferably 1, 2, 3 or 4; and R^{b} is selected from methyl, ethyl, propyl, butyl, pentyl.

It is preferred that the butadiene polymer comprises a repeating unit represented by Formula (I) and/or a repeating unit represented by Formula (II) and/or a repeating unit represented by Formula (III). It is further preferred that the butadiene polymer comprises a repeating unit represented by Formula (I), a repeating unit represented by Formula (II) and a repeating unit represented by Formula (III).

In a particularly preferred embodiment of the present invention, the repeating unit represented by Formula (IV) is represented by Formula (IVa), Formula (IVb) or Formula (IVc):

-[CH₂-CH(Ph)-] Formula (IVa)

-[CH₂-CH(CN)-] Formula (IVb)

-{CH₂-CH[(CH2)₂Si(OEt)_{3]}-} Formula (IVc).

In a most preferred embodiment of the present invention, the butadiene polymer is represented by the following Formulae (Va) to (Vg):

X-[CH₂-CH=CH-CH₂]ₘ[CH₂-CH(CH=CH₂)]ₙ-X Formula (Va)

X-[CH₂-CH=CH-CH₂]ₘ[CH₂-CH(CH=CH₂)]ₙ[CH₂-CH(Ph)]ₒ-X Formula (Vb)

X-[CH₂-CH=CH-CH₂]ₘ[CH₂-CH(CH=CH₂)]ₙ[CH₂-CH(CN)]ₚ-X Formula (Vc)

X-[CH₂-CH=CH-CH₂]ₘ[CH₂-CH(CH=CH₂)]ₙ[CH₂-CH(Ph)]ₒ [CH₂-CH(CN)]ₚ-X Formula (Vd)

X-[CH₂-CH=CH-CH₂]ₘ[CH₂-CH(CH=CH₂)]ₙ {CH₂-CH[(CH₂)₂Si(OEt)₃]}_{q}-X Formula (Ve)

X-[CH₂-CH=CH-CH₂]ₘ[CH₂-CH(CH=CH₂)]ₙ [CH₂-CH(Ph)]ₒ{CH₂-CH[(CH₂)₂Si(OEt)₃]}_{q}-X Formula (Vf)

X-[CH₂-CH=CH-CH₂]ₘ[CH₂-CH(CH=CH₂)]ₙ [CH₂-CH(CN)]ₚ{CH₂-CH[(CH₂)₂Si(OEt)₃]}_{q}-X Formula (Vg)

wherein X represents -OH or -Si(OMe)₃ or -Si(OEt)₃; and m, n and o are each independently integers ≥ 0, preferably integers from 0 to 1000, more preferably integers from 0 to 500, wherein at least one of m and n is ≠ 0.

The individual repeating units, which are denoted by the indices m, n, o, p and q, can be distributed either individually or in the form of blocks in the butadiene polymer, wherein the blocks consist of two or more of the same repeating unit. The distribution of the repeating units and/or blocks within the butadiene polymer can be either statistical or regular. Depending on the distribution of the repeating units and/or blocks within the butadiene polymer, the butadiene polymer may be present as a random copolymer, a block copolymer or a mixed random block copolymer containing at least one random section and at least one block section.

The butadiene polymers have a molecular weight distribution. Preferably, the butadiene polymers used in the present invention have a mass average molecular weight M_{w}, as determined by GPC, of at least 500 g/mol, more preferably of at least 750 g/mol, even more preferably of at least 1,000 g/mol. Preferably, the mass average molecular weight M_{w} of the silazane polymers is less than 100,000 g/mol. More preferably, the molecular weight M_{w} of the silazane polymers is in the range from 1,000 to 50,000 g/mol.

Preferably, the total content of the butadiene polymer in the coating composition is in the range from 10 to 90 weight-%, preferably from 15 to 75 weight-%, based on the total weight of silazane polymer in the coating composition.

### Silazane polymer

In a preferred embodiment, the silazane polymer comprises a repeating unit M¹ which is represented by the following Formula (1):

-[SiR¹R²-NR³-] Formula (1)

wherein R¹, R² and R³ are the same or different from each other and independently selected from hydrogen, an organic group, or a hetero-organic group.

Suitable organic and hetero-organic groups for R¹, R² and R³ include alkyl, alkylcarbonyl, alkenyl, cycloalkyl, aryl, arylalkyl, alkylsilyl, alkylsilyloxy, arylsilyl, arylsilyloxy, alkylamino, arylamino, alkoxy, alkoxycarbonyl, alkylcarbonyloxy, aryloxy, aryloxycarbonyl, arylcarbonyloxy, arylalkyloxy, and the like, and combinations thereof (preferably, alkyl, alkenyl, cycloalkyl, aryl, arylalkyl, alkoxy, aryloxy, arylalkyloxy, and combinations thereof); the groups preferably having from 1 to 30 carbon atoms (more preferably, 1 to 20 carbon atoms; even more preferably, 1 to 10 carbon atoms; most preferably, 1 to 6 carbon atoms (for example, methyl, ethyl or vinyl)). The groups can be further substituted with one or more substituent groups such as halogen (fluorine, chlorine, bromine, and iodine), alkoxy, alkoxycarbonyl, trialkoxysilyl, amino, carboxyl, hydroxyl, nitro, and the like, and combinations thereof.

In a preferred embodiment, R¹ and R² are the same or different from each other and independently selected from hydrogen, alkyl having 1 to 30 (preferably 1 to 20, more preferably 1 to 10, most preferably 1 to 6) carbon atoms, alkenyl having 2 to 30 (preferably 2 to 20, more preferably 2 to 10, most preferably 2 to 6) carbon atoms, or aryl having 2 to 30 (preferably 3 to 20, more preferably 4 to 10, most preferably 6) carbon atoms, wherein one or more hydrogen atoms bonded to carbon atoms may be replaced by fluorine; and R³ is selected from hydrogen, alkyl having 1 to 30 (preferably 1 to 20, more preferably 1 to 10, most preferably 1 to 6) carbon atoms, alkenyl having 2 to 30 (preferably 2 to 20, more preferably 2 to 10, most preferably 2 to 6) carbon atoms, or aryl having 2 to 30 (preferably 3 to 20, more preferably 4 to 10, most preferably 6) carbon atoms, wherein one or more hydrogen atoms bonded to carbon atoms may be replaced by fluorine or Si(OR')₃, wherein R' is selected from alkyl having 1 to 10 (preferably 1 to 6, more preferably 1 to 3) carbon atoms.

In a more preferred embodiment, R¹ and R² are the same or different from each other and independently selected from hydrogen, methyl, ethyl, propyl, butyl, pentyl, hexyl or phenyl, wherein one or more hydrogen atoms bonded to carbon atoms may be replaced by fluorine; and R³ is selected from hydrogen, methyl, ethyl, propyl, butyl, pentyl, hexyl, vinyl or phenyl, wherein one or more hydrogen atoms bonded to carbon atoms may be replaced by -F, -Si(OCH₃)₃, -Si(OCH₂CH₃)₃, -Si(OCH₂CH₂CH₃)₃, or -Si(OCH(CH₃)₂)₃.

Most preferably, R¹ and R² are the same or different from each other and independently selected from the list consisting of -H, -CH₃, -CH₂CH₃, -CH₂CH₂CH₃, -CH(CH₃)₂, -CH=CH₂, and -C₆H₅, wherein one or more hydrogen atoms bonded to carbon atoms may be replaced by fluorine; and R³ is selected from the list consisting of -H, -CH₃, -CH₂CH₃, -CH₂CH₂CH₃, -CH(CH₃)₂, -CH=CH₂, and -C₆H₅, wherein one or more hydrogen atoms bonded to carbon atoms may be replaced by -F or -Si(OCH₂CH₃)₃.

In a preferred embodiment, the silazane polymer comprises a repeating unit M² which is represented by the following Formula (2):

-[SiR⁴R⁵-NR⁶-] Formula (2)

wherein R⁴, R⁵ and R⁶ are the same or different from each other and independently selected from hydrogen, an organic group, or a hetero-organic group.

Suitable organic and hetero-organic groups for R⁴, R⁵ and R⁶ include alkyl, alkylcarbonyl, alkenyl, cycloalkyl, aryl, arylalkyl, alkylsilyl, alkylsilyloxy, arylsilyl, arylsilyloxy, alkylamino, arylamino, alkoxy, alkoxycarbonyl, alkylcarbonyloxy, aryloxy, aryloxycarbonyl, arylcarbonyloxy, arylalkyloxy, and the like, and combinations thereof (preferably, alkyl, alkenyl, cycloalkyl, aryl, arylalkyl, alkoxy, aryloxy, arylalkyloxy, and combinations thereof); the groups preferably having from 1 to 30 carbon atoms (more preferably, 1 to 20 carbon atoms; even more preferably, 1 to 10 carbon atoms; most preferably, 1 to 6 carbon atoms (for example, methyl, ethyl or vinyl)). The groups can be further substituted with one or more substituent groups such as halogen (fluorine, chlorine, bromine, and iodine), alkoxy, alkoxycarbonyl, trialkoxysilyl, amino, carboxyl, hydroxyl, nitro, and the like, and combinations thereof.

In a preferred embodiment, R⁴ and R⁵ are the same or different from each other and independently selected from hydrogen, alkyl having 1 to 30 (preferably 1 to 20, more preferably 1 to 10, most preferably 1 to 6) carbon atoms, alkenyl having 2 to 30 (preferably 2 to 20, more preferably 2 to 10, most preferably 2 to 6) carbon atoms, or aryl having 2 to 30 (preferably 3 to 20, more preferably 4 to 10, most preferably 6) carbon atoms, wherein one or more hydrogen atoms bonded to carbon atoms may be replaced by fluorine; and R⁶ is selected from hydrogen, alkyl having 1 to 30 (preferably 1 to 20, more preferably 1 to 10, most preferably 1 to 6) carbon atoms, alkenyl having 2 to 30 (preferably 2 to 20, more preferably 2 to 10, most preferably 2 to 6) carbon atoms, or aryl having 2 to 30 (preferably 3 to 20, more preferably 4 to 10, most preferably 6) carbon atoms, wherein one or more hydrogen atoms bonded to carbon atoms may be replaced by fluorine or Si(OR")₃, wherein R" is selected from alkyl having 1 to 10 (preferably 1 to 6, more preferably 1 to 3) carbon atoms.

In a more preferred embodiment, R⁴ and R⁵ are the same or different from each other and independently selected from hydrogen, methyl, ethyl, propyl, butyl, pentyl, hexyl or phenyl, wherein one or more hydrogen atoms bonded to carbon atoms may be replaced by fluorine; and R⁶ is selected from hydrogen, methyl, ethyl, propyl, butyl, pentyl, hexyl, vinyl or phenyl, wherein one or more hydrogen atoms bonded to carbon atoms may be replaced by -F, -Si(OCH₃)₃, -Si(OCH₂CH₃)₃, -Si(OCH₂CH₂CH₃)₃, or -Si(OCH(CH₃)₂)₃.

Most preferably, R⁴ and R⁵ are the same or different from each other and independently selected from the list consisting of -H, -CH₃, -CH₂CH₃, -CH₂CH₂CH₃, -CH(CH₃)₂, -CH=CH₂, and -C₆H₅, wherein one or more hydrogen atoms bonded to carbon atoms may be replaced by fluorine; and R⁶ is selected from the list consisting of -H, -CH₃, -CH₂CH₃, -CH₂CH₂CH₃, -CH(CH₃)₂, -CH=CH₂, and -C₆H₅, wherein one or more hydrogen atoms bonded to carbon atoms may be replaced by -F or -Si(OCH₂CH₃)₃.

In a preferred embodiment, the silazane polymer comprises a repeating unit M³ which is represented by the following Formula (3):

-[SiR⁷R⁸-O-] Formula (3)

wherein R⁷ and R⁸ are the same or different from each other and independently selected from hydrogen, an organic group, or a hetero-organic group.

Suitable organic and hetero-organic groups for R⁷ and R⁸ include alkyl, alkylcarbonyl, alkenyl, cycloalkyl, aryl, arylalkyl, alkylsilyl, alkylsilyloxy, arylsilyl, arylsilyloxy, alkylamino, arylamino, alkoxy, alkoxycarbonyl, alkylcarbonyloxy, aryloxy, aryloxycarbonyl, arylcarbonyloxy, arylalkyloxy, and the like, and combinations thereof (preferably, alkyl, alkenyl, cycloalkyl, aryl, arylalkyl, alkoxy, aryloxy, arylalkyloxy, and combinations thereof); the groups preferably having from 1 to 30 carbon atoms (more preferably, 1 to 20 carbon atoms; even more preferably, 1 to 10 carbon atoms; most preferably, 1 to 6 carbon atoms (for example, methyl, ethyl or vinyl)). The groups can be further substituted with one or more substituent groups such as halogen (fluorine, chlorine, bromine, and iodine), alkoxy, alkoxycarbonyl, amino, carboxyl, hydroxyl, nitro, and the like, and combinations thereof.

In a preferred embodiment, R⁷ and R⁸ are the same or different from each other and independently selected from hydrogen, alkyl having 1 to 30 (preferably 1 to 20, more preferably 1 to 10, most preferably 1 to 6) carbon atoms, alkenyl having 2 to 30 (preferably 2 to 20, more preferably 2 to 10, most preferably 2 to 6) carbon atoms, or aryl having 2 to 30 (preferably 3 to 20, more preferably 4 to 10, most preferably 6) carbon atoms, wherein one or more hydrogen atoms bonded to carbon atoms may be replaced by fluorine.

In a more preferred embodiment, R⁷ and R⁸ are the same or different from each other and independently selected from hydrogen, methyl, ethyl, propyl, butyl, pentyl, hexyl or phenyl, wherein one or more hydrogen atoms bonded to carbon atoms may be replaced by fluorine.

Most preferably, R⁷ and R⁸ are the same or different from each other and independently selected from the list consisting of -H, -CH₃, -CH₂CH₃, -CH₂CH₂CH₃, -CH(CH₃)₂, -CH=CH₂, and -C₆H₅, wherein one or more hydrogen atoms bonded to carbon atoms may be replaced by fluorine.

It is preferred that the silazane polymer comprises a repeating unit M¹ and a further repeating unit M², wherein M¹ and M² are silazane repeating units which are different from each other.

It is also preferred that the silazane polymer comprises a repeating unit M¹ and a further repeating unit M³, wherein M¹ is a silazane repeating unit and M³ is a siloxane repeating unit.

It is also preferred that the silazane polymer comprises a repeating unit M¹, a further repeating unit M² and a further repeating unit M³, wherein M¹ and M² are silazane repeating units which are different from each other and M³ is a siloxane repeating unit.

In one embodiment, the silazane polymer is a polysilazane which may be a perhydropolysilazane or an organopolysilazane. Preferably, the polysilazane contains a repeating unit M¹ and optionally a further repeating unit M², wherein M¹ and M² are silazane repeating units which are different from each other.

In an alternative embodiment, the silazane polymer is a polysiloxazane which may be a perhydropolysiloxazane or an organopolysiloxazane. Preferably, the polysiloxazane contains a repeating unit M¹ and a further repeating unit M³, wherein M¹ is a silazane repeating unit and M³ is a siloxane repeating unit. Preferably, the polysiloxazane contains a repeating unit M¹, a further repeating unit M² and a further repeating unit M³, wherein M¹ and M² are silazane repeating units which are different from each other and M³ is a siloxane repeating unit.

Preferably, the silazane polymer is a copolymer such as a random copolymer or a block copolymer or a mixed random block copolymer containing at least one random section and at least one block section. More preferably, the silazane polymer is a random copolymer or a block copolymer.

It is preferred that the silazane polymers used in the present invention do not have a monocyclic structure. More preferably, the silazane polymers have a mixed polycyclic, linear and/or branched-chain structure.

The silazane polymers have a molecular weight distribution. Preferably, the silazane polymers used in the present invention have a mass average molecular weight M_{w}, as determined by GPC, of at least 1,000 g/mol, more preferably of at least 1,200 g/mol, even more preferably of at least 1,500 g/mol. Preferably, the mass average molecular weight M_{w} of the silazane polymers is less than 100,000 g/mol. More preferably, the molecular weight M_{w} of the silazane polymers is in the range from 1,500 to 50,000 g/mol.

Preferably, the total content of the silazane polymer in the coating composition is in the range from 10 to 90 weight-%, preferably from 25 to 85 weight-%, based on the total weight of the coating composition.

### Further components

It is preferred that the coating composition of the present invention comprises one or more solvents. Suitable solvents are organic solvents such as, for example, aliphatic and/or aromatic hydrocarbons, which may be halogenated, such as 1-chloro-4-(trifluoromethyl)benzene, esters such as ethyl acetate, n-butyl acetate, propylene glycol methyl ether acetate, or tert-butyl acetate, ketones such as acetone or methyl ethyl ketone, ethers such as tetrahydrofuran or dibutyl ether, and also mono- or polyalkylene glycol dialkyl ethers (glymes), or mixtures thereof.

Moreover, the coating composition according to the present invention may comprise one or more additives, preferably selected from the list consisting of additives influencing evaporation behavior, additives influencing film formation, adhesion promoters, anti-corrosion additives, crosslinking agents, dispersants, fillers, functional pigments (e.g. for providing functional effects such as electric or thermal conductivity, magnetic properties, etc.), nanoparticles, optical pigments (e.g. for providing optical effects such as color, refractive index, pearlescent effect, etc.), particles reducing thermal expansion, primers, rheological modifiers (e.g. thickeners), surfactants (e.g. wetting and leveling agents or additives for improving hydro- or oleophobicity and anti-graffiti effects), viscosity modifiers, and other kinds of resins or polymers.

Nanoparticles may be selected from nitrides, titanates, diamond, oxides, sulfides, sulfites, sulfates, silicates and carbides which may be optionally surface-modified with a capping agent. Preferably, nanoparticles are materials having a particle diameter of < 100 nm, more preferably < 80 nm, even more preferably < 60 nm, even more preferably < 40 nm, and most preferably < 20 nm. The particle diameter may be determined by any standard method known to the skilled person.

It is possible to accelerate the curing of the coating composition by the addition of one or more catalysts. Examples of useful catalysts are Lewis acids such as boron-, aluminum-, tin- or zinc-alkyls, aryls or carboxylates, Brönsted acids such as carboxylic acids, bases such as primary, secondary or tertiary amines or phosphazenes, or metal salts such as Pd, Pt, Al, B, Sn or Zn salts of carboxylates, acetylacetonates or alkoxylates. If silazanes having both Si-H and Si-CH=CH₂ groups are used, well known hydrosilylation catalysts such as Pt or Pd salts or complexes can be used. If silazanes having only Si-CH=CH₂ or both Si-H and Si-CH=CH₂ groups are used, UV or thermal radical initiators like peroxides or azo compounds can be used. In a preferred embodiment, the coating composition according to the present invention comprises one or more of the above-mentioned catalysts.

It is preferred that the mass ratio between the silazane polymer and the butadiene polymer in the coating composition of the present invention is in the range from 1:100 to 100:1, preferably from 1:50 to 50:1, more preferably from 1:10 to 10:1, even more preferably from 1:8 to 8:1, and most preferably from 1:3 to 6:1.

It is to be understood that the skilled person can freely combine the above-mentioned preferred, more preferred, particularly preferred and most preferred embodiments relating to the coating composition and definitions of its components in any desired way.

### Method

The present invention further relates to a method for preparing a coated article, wherein the method comprises the following steps:
(a) applying a coating composition according to the present invention to a surface of an article; and
(b) curing said coating composition to obtain a coated article.

In a preferred embodiment, the coating composition, which is applied in step (a), is previously provided by mixing a first component comprising a silazane polymer with a second component comprising a butadiene polymer, wherein the silazane polymer and the butadiene polymer are defined as indicated above for the coating composition according to the present invention. It is preferred that the mixing of the first component with the second component takes place at room temperature or at an elevated temperature, preferably at a temperature between 60 and 220°C, more preferably at a temperature between 80 and 180°C.

Preferably, the coating composition, which is applied in step (a), is a homogeneous liquid having a viscosity in the range from 2 to 1,000 mPas. The viscosity of the composition may be adjusted by the type and content of solvent as well as the type, ratio and molecular weight of the silazane polymer and the butadiene polymer.

It is preferred that the coating composition is applied in step (a) by an application method suitable for applying liquid compositions to a surface of an article. Such methods include, for example, wiping with a cloth, wiping with a sponge, dip coating, spray coating, flow coating, roller coating, slit coating, slot coating, spin coating, dispensing, screen printing, stencil printing or ink-jet printing. Dip coating and spray coating are particularly preferred.

The coating composition of the present invention may be applied to the surface of various articles such as, for example, buildings, dentures, furnishings, furniture, sanitary equipment (toilets, sinks, bathtubs, etc.), signs, signboard, plastic products, glass products, ceramics products, metal products, wood products and vehicles (road vehicles, rail vehicles, watercrafts and aircrafts). It is preferred that the surface of the article is made of any one of the base materials as described for the use below.

Typically, the coating composition is applied in step (a) as a layer in a thickness of 1 µm to 1 cm, preferably 10 µm to 1 mm, to the surface of the article. In a preferred embodiment, the coating composition is applied as a thin layer having a thickness of 1 to 200 µm, more preferably 2 to 150 µm and most preferably 2 to 100 µm. In an alternative preferred embodiment, the coating composition is applied as a thick layer having a thickness of 200 µm to 1 cm, more preferably 200 µm to 5 mm and most preferably 200 µm to 1 mm.

The curing of the coating in step (b) may be carried out under various conditions such as e.g. by ambient curing, thermal curing and/or irradiation curing. The curing is optionally carried out in the presence of moisture, preferably in the form of water vapor. For this purpose, a climate chamber may be used.

Ambient curing preferably takes place at temperatures in the range from 10 to 40°C. Thermal curing preferably takes place at temperatures in the range from 100 to 200°C, preferably from 120 to 180°C. Irradiation curing preferably takes place with IR irradiation or UV irradiation. Preferred IR irradiation wavelengths are in the range from 7 to 15 µm or from 1 to 3 µm for substrate absorption. Preferred UV irradiation wavelengths are in the range from 300 to 500 nm.

Preferably, the curing in step (b) is carried out in a furnace or climate chamber. Alternatively, if articles of very large size are coated (e.g. buildings, vehicles, etc.), the curing is preferably carried out under ambient conditions.

Preferably, the curing time for step (b) is from 0.01 to 24 h, more preferably from 0.10 to 16 h, still more preferably from 0.15 to 8 h, and most preferably from 0.20 to 5 h, depending on the coating composition and coating thickness.

Other preferred curing conditions are:
1. Thermal curing in the presence of a catalyst such as, e.g. peroxides or sulfur compounds (vulcanization).
2. UV curing in the presence of UV active photoinitiators.

After the curing in step (b), the coating composition is chemically crosslinked to form a coating on the surface of the article.

The coating obtained by the above method forms a rigid and dense functional coating which is excellent in adhesion to the surface and imparts at least one of the above-mentioned improved physical and/or chemical surface properties to the article.

### Article

Moreover, a coated article is provided, which is obtainable or obtained by the above-mentioned preparation method.

### Use

The present invention further relates to the use of the coating composition according to the present invention for forming a functional coating on the surface of a base material.

It is preferred that by the use according to the present invention one or more of the above-mentioned surface physical and/or chemical surface properties are improved.

Preferred base materials, to which the coating composition according to the present invention is applied, include a wide variety of materials such as, for example, metals (such as iron, steel, silver, zinc, aluminum, nickel, titanium, vanadium, chromium, cobalt, copper, zirconium, niobium, molybdenum, ruthenium, rhodium, silicon, boron, tin, lead or manganese or alloys thereof provided, if necessary, with an oxide or plating film); plastics (such as polymethyl methacrylate (PMMA), polyurethane, polyesters (PET), polyallyldiglycol carbonate (PADC), polycarbonate, polyimide, polyamide, epoxy resin, ABS resin, polyvinyl chloride, polyethylene (PE), polypropylene (PP), polythiocyanate, or polytetrafluoroethylene (PTFE)); glass (such as fused quartz, soda-lime-silica glass (window glass), sodium borosilicate glass (Pyrex^{®}), lead oxide glass (crystal glass), aluminosilicate glass, or germanium-oxide glass); and construction materials (such as brick, cement, ceramics, clay, concrete, gypsum, marble, mineral wool, mortar, stone, or wood and mixtures thereof).

The base materials may be treated with a primer to enhance the adhesion of the functional coating. Such primers are, for instance, silanes, siloxanes, or silazanes. If plastic materials are used, it may be advantageous to perform a pretreatment by flaming, corona or plasma treatment which might improve the adhesion of the functional coating. If construction materials are used, it may be advantageous to perform a precoating with lacquers, varnishes or paints such as, for example, polyurethane lacquers, acrylic lacquers and/or dispersion paints.

The present invention is further illustrated by the examples following hereinafter which shall in no way be construed as limiting. The skilled person will acknowledge that various modifications, additions and alternations may be made to the invention without departing from the spirit and scope of the present invention.

### Examples

In the examples described here, two different ways of combining a silazane polymer and a butadiene polymer were tested.

The first way resides in the combination of hydroxy-functionalized butadiene polymers with silazane polymers, where the OH-groups of the butadiene polymers react with the silazane polymers to form polysilazane-polybutadiene block copolymers:

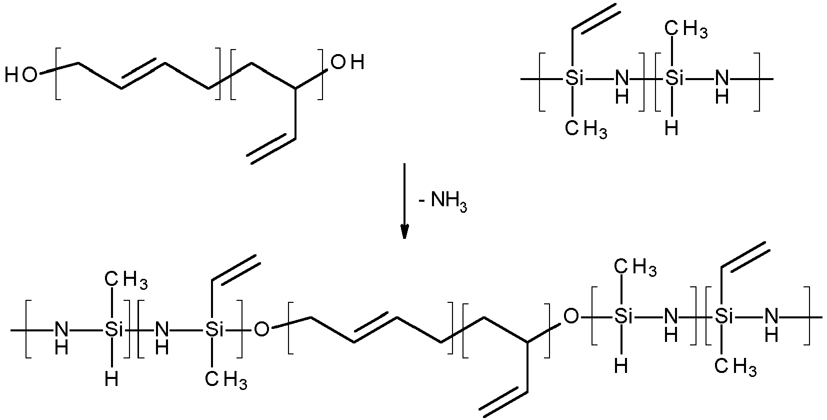

The advantage of forming block copolymers over a mere physical mixture of both polymer components is that the silazane polymers and the butadiene polymers cannot separate during film formation and curing and do not form cloudy films. This is particularly important where the polybutadiene polymer has a high molecular weight and there is therefore a high risk of phase separation. In some cases, however, simple physical mixing is also possible. If the silazane polymers used for the block copolymer formation contain vinyl groups, they can be further crosslinked, for example, by a free radical initiated reaction as shown in the following sketch:

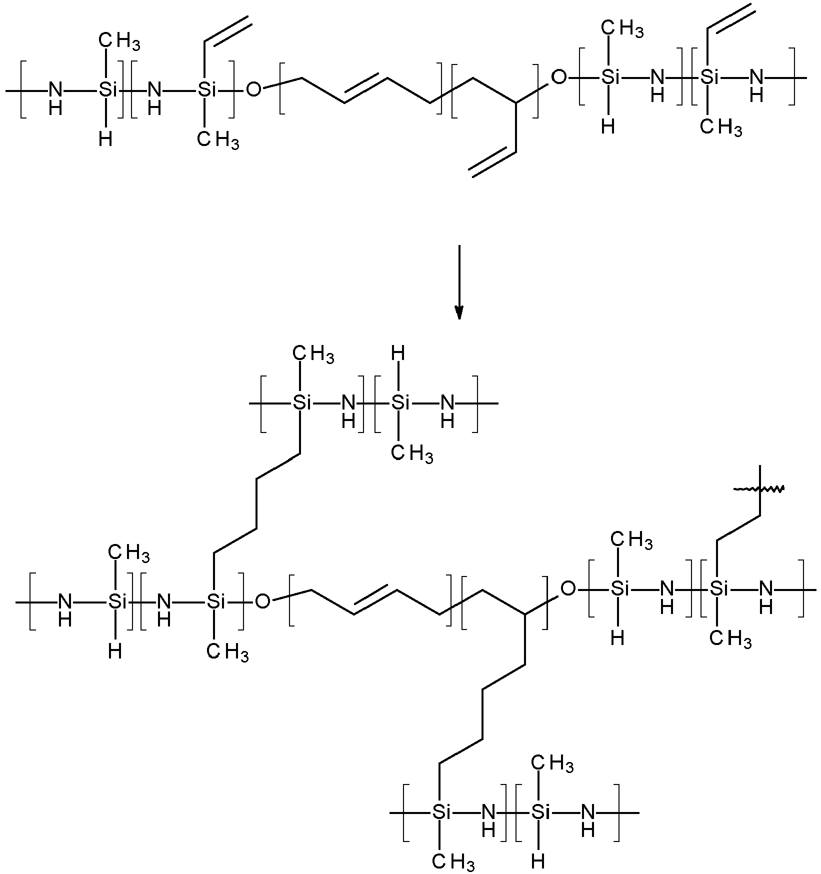

Other possible crosslinking mechanisms are the Si-H to Si-CH=CH₂ addition, the Si-H to polybutadiene C=C addition and the polybutadiene C=C to polybutadiene C=C addition. Reactions in which the Si-H groups are involved can also be catalyzed by known hydrosilylation catalysts such as e.g. Pd or Pt compounds.

The radical crosslinking can be initiated, for example, by thermal decomposition of a peroxide. Besides the vinyl groups of 1,2-linked repeating units derived from substituted or unsubstituted 1,3-butadiene monomers, the internal vinyl groups of 1,4-linked repeating units derived from substituted or unsubstituted 1,3-butadiene monomers can take part in radical crosslinking reactions, too. Other types of crosslinking reactions via vinyl groups are possible, too, for example a hydrosilylation reaction by radiation induced processes or by other kinds of catalysts.

The second way relates to the combination of alkoxysilane-functionalized butadiene polymers with silazane polymers. The crosslinking reaction takes place by water induced hydrolysis mechanisms, either via reaction with aminopropyltriethoxy silane units of Durazane 1500 type silazane polymers (Mechanism A) or via reaction with the silazane polymer backbone itself (Mechanism B).

### Mechanism A

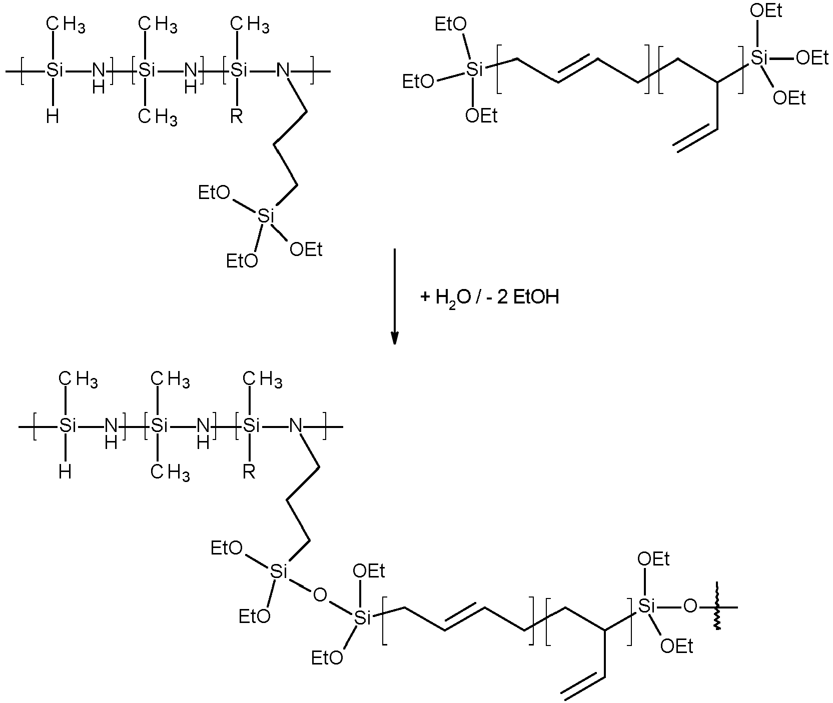

### Mechanism B

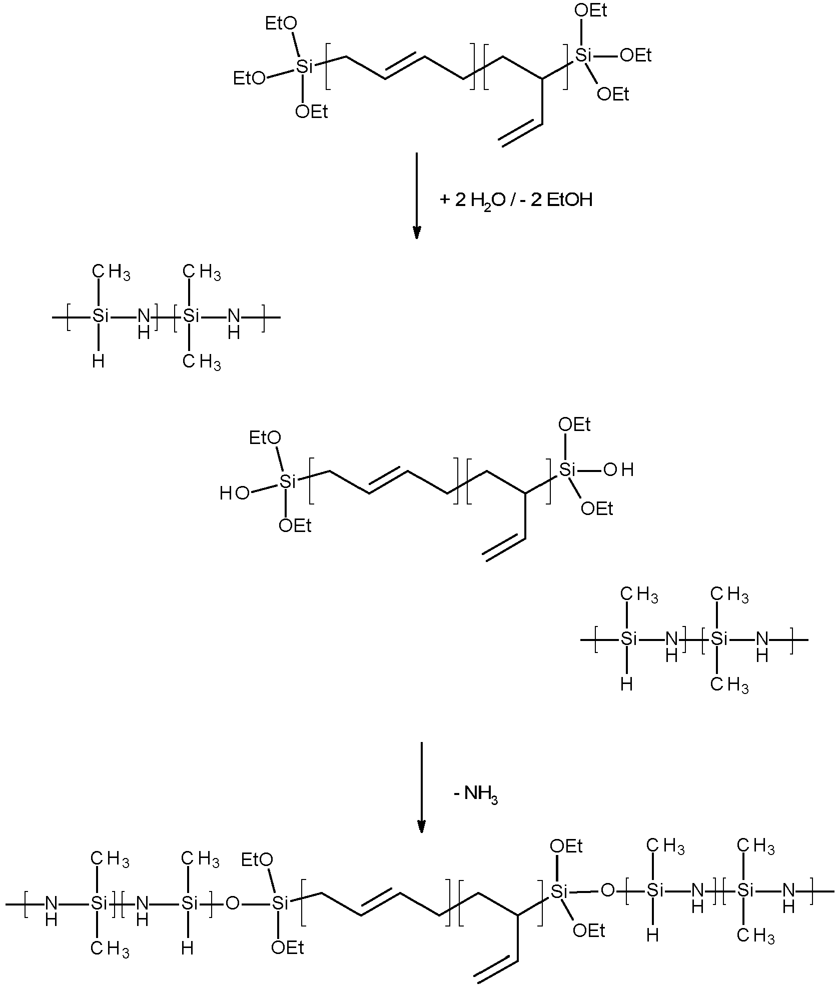

Other types of butadiene polymer functionalized with alkoxysilane groups can be used, too, such as, e.g. Gelest Inc. Product Code SSP-055:

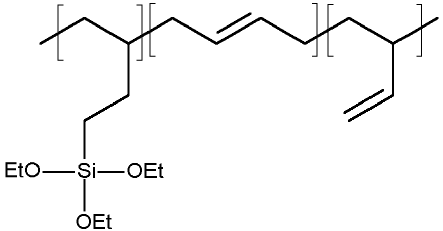

### Preparation of coating compositions

### Used raw materials

Silazane polymers: Organopolysilazanes Durazane 1800 (vinyl-functional type) and Durazane 1500 rapid cure (aminopropyltriethoxy silane-functional type) are available from MERCK KGaA.

Butadiene polymers: Polybutadienes type KRASOL LBH-P 2000 (OH end-group functionalized) and RICON 603 (alkoxysilane end-group functionalized) are available from Cray Valley.

The solvent (xylene), the peroxide (Luperox 531M80) and the curing catalyst (DBU: 1,8-Diazabicyclo[5.4.0]undec-7-en) were obtained from Sigma-Aldrich in analytical grade quality.

### Experiment 1

In a first experiment, the combination of vinyl-functionalized polysilazane and OH end-group functionalized polybutadiene was tested.

### Preparation:

100 g of Durazane 1800, 100 g of KRASOL LBH-P 2000 and 100 g of xylene were placed in a 500 ml round flask equipped with a stirrer, reflux condenser and a nitrogen inlet. The mixture was heated to 80°C for 8 h under a nitrogen atmosphere and then cooled to 25°C. A clear colorless solution of the block copolymer in xylene with a viscosity of 80-120 mPas at 25°C was obtained.

### Application:

To the solution as prepared above, 2.5 weight-% of the peroxide Luperox 531M80 was added and the coating composition was spin-coated on 3 inch silicon wafers at different rotation speeds to adjust film thickness from 5 µm up to 40 µm in 5 µm increments. As a reference, pure Durazane 1800 with 1.0 weight-% of Luperox 531M80 was spin coated on silicon wafers to prepare coated wafers with film thicknesses of 5 µm up to 40 µm in 5 µm increments.

All coated wafers were put on a hot plate at 80°C for 5 min to evaporate the solvent and then the temperature of the hot plate was increased to 150°C and the wafers were cured at 150°C for 4 h. After cooling down to room temperature, the film properties of the obtained coatings were evaluated as shown in Table 1. Then, all wafers were put back on the hot plate, heated to 200°C for 4 h and cooled down to room temperature and the appearance of the coatings was checked. Those wafers that were not cracked were evaluated for their coating properties as shown in Table 2.

**Table 1: Results of coatings prepared from Durazane 1800 and KRASOL LBH-P 2000 after curing for 4 h at 150°C.**

| | **Film Properties(*) after curing for 4 h at 150°C** | | | | | | | |
|---|---|---|---|---|---|---|---|---|
| **Film thickness [µm]** 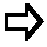 | 5 | 10 | 15 | 20 | 25 | 30 | 35 | 40 |

| **Material** 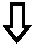 | | | | | | | | |
|---|---|---|---|---|---|---|---|---|
| Experiment 1 | c/n/145 | c/n/140 | c/n/140 | c/n/135 | c/n/140 | c/n/130 | c/n/135 | c/n/125 |
| Durazane 1800 | c/n/150 | c/n/155 | c/n/150 | c/n/150 | c/n/145 | c/n/145 | c/y/-- | c/y/-- |

| | | | | | | | | |
|---|---|---|---|---|---|---|---|---|
| (*) Film Properties: Appearance/Cracks/Nanoindenter Hardness [Appearance: c = colorless, y = yellow, b = brown; Cracks: rating: n = no, f = few, y = yes; Nanoindenter Hardness: Indentation Hardness in MPa]. | | | | | | | | |

**Table 2: Results of coatings prepared from Durazane 1800 and KRASOL LBH-P 2000 after curing for 4 h at 200°C.**

| | **Film Properties(*) after curing for 4 h at 150°C and additional 4 h at 200°C** | | | | | | | |
|---|---|---|---|---|---|---|---|---|
| **Film thickness [µm]** 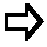 | 5 | 10 | 15 | 20 | 25 | 30 | 35 | 40 |

| **Material** 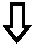 | | | | | | | | |
|---|---|---|---|---|---|---|---|---|
| Experiment 1 | b/n/170 | b/n/165 | b/n/160 | b/n/160 | b/n/155 | b/n/150 | b/n/155 | b/n/150 |
| Durazane 1800 | c/n/175 | c/n/180 | c/n/175 | c/f/170 | c/y/-- | c/y/-- | c/y/-- | c/y/-- |

| | | | | | | | | |
|---|---|---|---|---|---|---|---|---|
| (*) Film Properties: Appearance/Cracks/Nanoindenter Hardness [Appearance: c = colorless, y = yellow, b = brown; Cracks: rating: n = no, f = few, y = yes; Nanoindenter Hardness: Indentation Hardness in MPa]. | | | | | | | | |

When compared to pure Durazane 1800, the coating compositions of the present invention form crack-free films having much higher film thicknesses with only minor impairment in hardness. At 200°C, the inventive coating compositions are crack-free with film thicknesses of up to > 40 µm, while pure Durazane coatings show some cracks, even at a much lower film thickness of 20 µm.

For evaluating the resistance towards chemicals and acids/bases, the coating of Experiment 1 with 10 µm film thickness, which was cured for 4 h at 150°C and additionally for 4 h at 200°C, was exposed to certain chemicals and acids/bases. Pure Durazane 1800 cured at the same film thickness and under the same curing conditions was used as a reference. The test was performed by placing a drop of 0.3 g of the test liquid on the surface of the coated substrates, storing the substrates for 24 h under ambient conditions, cleaning the substrates with water and visually evaluating a possible attack of the coating. The results are shown in Table 3.

**Table 3: Results of chemical and acid/base resistance test.**

| | **Chemical and Acid/Base Resistance(*)** | | | | | |
|---|---|---|---|---|---|---|
| **Material** 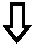 | CA | AA | HCl | NaOH | MEK | THF |
| Experiment 1 | + | + | + | ○ | + | + |
| Durazane 1800 | + | - | + | - | ○ | + |

| | | | | | | |
|---|---|---|---|---|---|---|
| (*) Test liquids: CA = 5% aqueous citric acid, AA = 5% aqueous acetic acid, HCl = 5% aqueous hydrochloric acid, NaOH = 1% aqueous sodium hydroxide, MEK = methyl ethyl ketone, THF = tetrahydrofurane. Rating: + = no attack, o = some attack, - = severe attack. | | | | | | |

When compared to pure Durazane 1800, the coating compositions of the present invention show an improved chemical and acid/base resistance. Especially, the resistance against aqueous acetic acid and aqueous sodium hydroxide is improved. In contrast, pure Durazane has a very poor stability against aqueous acetic acid and aqueous sodium hydroxide. The excellent chemical and acid/base resistance of the silazane-polybutadiene copolymer enables its use in coatings for various kinds of corrosion protection.

### Experiment 2

### Preparation:

To find the best mixing ratio of silazane polymer to butadiene polymer, the preparation given in Experiment 1 was repeated, except that the mixing weight ration of Durazane 1800 to KRASOL LBH-P 2000 was varied from 3:1 (Copolymer 1) to 1:1 (same ratio as in Experiment 1, Copolymer 2) and to 1:3 (Copolymer 3).

### Application:

To the solutions as prepared above, 2.5 weight-% of the peroxide Luperox 531M80 was added and the coating compositions were spin-coated on 3 inch Silicon wafers at different rotation speeds to adjust the film thickness from 5 µm up to 40 µm in 5 µm increments. As a reference, pure Durazane 1800 with 1.0 weight-% of Luperox 531M80 was spin coated on Silicon wafers to prepare coated wafers with film thicknesses of 5 µm up to 40 µm in 5 µm increments.

All coated wafers were put on a hot plate at 80°C for 5 min to evaporate the solvent and then the temperature of the hot plate was increased to 150°C and the wafers were cured at 150°C for 4 h and then at 200°C for an additional 4 h. After cooling down to room temperature, the film properties of the obtained coatings were evaluated as shown in Table 4.

**Table 4: Results of coatings prepared from Durazane 1800 and KRASOL LBH-P 2000 after curing for 4 h at 150°C and additional 4 h at 200°C.**

| | **Film Properties(*) after curing for 4 h at 150°C and additional 4 h at 200°C** | | | | | | | |
|---|---|---|---|---|---|---|---|---|
| **Film thickness [µm]** 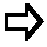 | 5 | 10 | 15 | 20 | 25 | 30 | 35 | 40 |

| **Material** 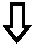 | | | | | | | | |
|---|---|---|---|---|---|---|---|---|
| Copolymer 1 | c/n/170 | c/n/175 | c/n/170 | c/n/165 | c/n/165 | c/f/160 | c/y/-- | c/y/-- |
| Copolymer 2 | b/n/170 | b/n/165 | b/n/160 | b/n/160 | b/n/155 | b/n/150 | b/n/155 | b/n/150 |
| Copolymer 3 | b/n/75 | b/n/70 | b/n/75 | b/n/70 | b/n/65 | b/n/70 | b/n/65 | b/n/65 |
| Durazane 1800 | c/n/175 | c/n/180 | c/n/175 | c/f/170 | c/y/-- | c/y/-- | c/y/-- | c/y/-- |

| | | | | | | | | |
|---|---|---|---|---|---|---|---|---|
| (*) Film Properties: Appearance/Cracks/Nanoindenter Hardness [Appearance: c = colorless, y = yellow, b = brown; Cracks: rating: n = no, f = few, y = yes; Nanoindenter Hardness: Indentation Hardness in MPa]. | | | | | | | | |

A drop in hardness is observed by adding butadiene polymer in increasing amounts. On the other hand, a higher film thickness without crack formation is possible. Pure Durazane 1800 is very brittle and shows first cracks at 200°C already at 20 µm film thickness. A mixing ratio of 1:1 of both polymer components shows synergistic effects by enabling crack-free coatings with film thicknesses of > 40 µm while maintaining more than 90% of the hardness of the coating obtained from pure Durazane 1800.

### Experiment 3

In a third experiment the combination of alkoxysilane functionalized silazane polymer and alkoxysilane functionalized butadiene polymer was tested.

### Preparation:

100 g of Durazane 1500 rapid cure, 100 g of RICON 603 and 50 g of xylene were mixed. A clear colorless solution of the polymer mixture in xylene with a viscosity of 40-60 mPas at 25°C was obtained.

### Application:

To the solution as prepared above, 2.5 weight-% of the peroxide Luperox 531M80 and 0.2 weight-% of the curing catalyst DBU [1,8-diazabicyclo [5.4.0]undec-7-en] were added and the coating composition was spin-coated on 3 inch silicon wafers at different rotation speeds to adjust the film thickness from 5 µm up to 40 µm in 5µm increments. As a reference, pure Durazane 1500 rapid cure was spin coated on silicon wafers to prepare coated wafers with film thicknesses of 5 µm up to 40 µm in 5µm increments.

All coated wafers were put on a hot plate at 80°C for 5 min to evaporate the solvent and then the temperature of the hot plate was increased to 150°C and the wafer were cured at 150°C for 4h. Then, all wafers were stored at conditions of 25°C and 50% relative humidity for 21 days to allow full moisture curing of the silazane polymer. Then, the film properties of all coatings were evaluated as shown in Table 5.

**Table 5: Results of coatings prepared from Durazane 1500 rapid cure and RICON 603 after curing for 4 h at 150°C and additional 21 days at 25°C/50% relative humidity.**

| | **Film Properties(*) after curing for 4 h at 150°C and additional 21 days at 25°C/50% relative humidity** | | | | | | | |
|---|---|---|---|---|---|---|---|---|
| **Film thickness [µm]** 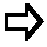 | 5 | 10 | 15 | 20 | 25 | 30 | 35 | 40 |

| **Material** 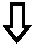 | | | | | | | | |
|---|---|---|---|---|---|---|---|---|
| Experiment 3 | c/n/150 | c/n/145 | c/n/145 | c/n/140 | c/n/140 | c/n/135 | c/n/135 | c/n/130 |
| Durazane 1500 rc | c/n/155 | c/n/160 | c/n/155 | c/n/150 | c/f/-- | c/y/-- | c/y/-- | c/y/-- |

| | | | | | | | | |
|---|---|---|---|---|---|---|---|---|
| (*) Film Properties: Appearance/Cracks/Nanoindenter Hardness [Appearance: c = colorless, y = yellow, b = brown; Cracks: rating: n = no, f = few, y = yes; Nanoindenter Hardness: Indentation Hardness in MPa]. | | | | | | | | |

The combination of the silazane polymer and the butadiene polymer shows synergistic effects by enabling crack-free film thicknesses of > 40 µm (the pure Durazane 1500 rapid cure shows crack formation already at 25 µm film thickness) while maintaining more than 90% of the hardness of the coating obtained from pure Durazane 1500 rapid cure.

### Methods used:

Hardness Nanoindenter: Martens Hardness, measured according to DIN EN ISO 14577-1/ASTM E 2546, with a Nanoindenter Helmut Fisher FISCHERSCOPE HM2000 S, Vickers diamond pyramid test cycle = 0.00025/10/0, n = 10. Each measurement was repeated 5 times at different positions, an average was calculated and the result was rounded to +/- 5 MPa, since the standard deviation was found to be +/- 3 MPa.

## Claims

1. A coating composition, comprising:
(i) a silazane polymer; and
(ii) a butadiene polymer;
wherein the butadiene polymer comprises one or more repeating units derived from a substituted or unsubstituted 1,3-butadiene monomer and one or more functional groups selected from -OH or -Si(OR)₃, wherein R is selected from H, alkyl, aryl or aralkyl.

2. The coating composition according to claim 1, wherein R is selected from H, alkyl having 1 to 10 carbon atoms, aryl having 2 to 10 carbon atoms or aralkyl having 3 to 20 carbon atoms.

3. The coating composition according to claim 1 or 2, wherein the repeating unit derived from a substituted or unsubstituted 1,3-butadiene monomer is represented by Formula (I), Formula (II) or Formula (III):
-[CH₂-CX^{I}=CH-CH₂-] Formula (I)
-[CH₂-CX^{II}(CH=CH₂)-] Formula (II)
-[CH₂-CH(CX^{III}=CH₂)-] Formula (III)
wherein X^{I} is H, halogen or alkyl having 1 to 5 carbon atoms; X" is H, halogen or alkyl having 1 to 5 carbon atoms; and X^{III} is halogen or alkyl having 1 to 5 carbon atoms.

4. The coating composition according to claim 1 or 2, wherein the butadiene polymer comprises a first and a second repeating unit derived from a substituted or unsubstituted 1,3-butadiene monomer, wherein the first repeating unit is represented by Formula (I) and the second repeating unit is represented by Formula (II):
-[CH₂-CX^{I}=CH-CH₂-] Formula (I)
-[CH₂-CX^{II}(CH=CH₂)-] Formula (II)
wherein X^{I} and X" are the same and selected from H, halogen and alkyl having 1 to 5 carbon atoms.

5. The coating composition according to one or more of claims 1 to 4, wherein the butadiene polymer comprises one or more further repeating units.

6. The coating composition according to claim 5, wherein the further repeating unit is represented by Formula (IV):
-[CH₂-CHR^{a}-] Formula (IV)
wherein R^{a} is selected from cyano, alkyl, aryl or aralkyl, wherein alkyl, aryl or aralkyl may be substituted with one or more substituents.

7. The coating composition according to claim 1 or 2, wherein the butadiene polymer comprises one or more repeating units derived from a substituted or unsubstituted 1,3-butadiene monomer represented by Formula (I), Formula (II) or Formula (III) and one or more further repeating units represented by Formula (IV):
-[CH₂-CX^{I}=CH-CH₂-] Formula (I)
-[CH₂-CX^{II}(CH=CH₂)-] Formula (II)
-[CH₂-CH(CX^{III}=CH₂)-] Formula (III)
-[CH₂-CHR^{a}-] Formula (IV)
wherein X^{I} is H, halogen or alkyl having 1 to 5 carbon atoms; X" is H, halogen or alkyl having 1 to 5 carbon atoms; and X^{III} is halogen or alkyl having 1 to 5 carbon atoms; and R^{a} is selected from cyano, alkyl, aryl or aralkyl, wherein alkyl, aryl or aralkyl may be substituted with one or more substituents.

8. The coating composition according to one or more of claims 1 to 7, wherein the silazane polymer comprises a repeating unit M¹ represented by Formula (1):
-[SiR¹R²-NR³-] Formula (1)
wherein R¹, R² and R³ are the same or different from each other and independently selected from H, an organic group, or a hetero-organic group.

9. The coating composition according to claim 8, wherein the silazane polymer further comprises a repeating unit M² represented by Formula (2):
-[SiR⁴R⁵-NR⁶-] Formula (2)
wherein R⁴, R⁵ and R⁶ are the same or different from each other and independently selected from H, an organic group, or a hetero-organic group.

10. The coating composition according to one or more of claims 1 to 9, wherein the composition further comprises one or more solvents.

11. The coating composition according to one or more of claims 1 to 10, wherein the composition further comprises one or more additives.

12. A method for preparing a coated article, wherein the method comprises the following steps:
(a) applying a coating composition according to one or more of claims 1 to 11 to a surface of an article; and
(b) curing said coating composition to obtain a coated article.

13. The method according to claim 12,
wherein the coating composition applied in step (a) is previously provided by mixing a first component comprising a silazane polymer with a second component comprising a butadiene polymer, wherein the silazane polymer and the butadiene polymer are defined as in one or more of claims 1 to 11.

14. A coated article, obtainable by the method according to claim 12 or 13.

15. Use of a coating composition according to one or more of claims 1 to 11 for forming a functional coating on a surface of a base material.

## Patentansprüche

1. Beschichtungszusammensetzung, enthaltend:
(i) ein Silazanpolymer; und
(ii) ein Butadienpolymer;
wobei das Butadienpolymer eine oder mehrere Wiederholungseinheiten enthält, die abgeleitet sind von einem substituierten oder unsubstituierten 1,3-Butadien-Monomer und einer oder mehreren funktionellen Gruppen, die ausgewählt sind aus -OH oder -Si(OR)₃, wobei R ausgewählt ist aus H, Alkyl, Aryl oder Aralkyl.

2. Beschichtungszusammensetzung nach Anspruch 1, wobei R ausgewählt ist aus H, Alkyl mit 1 bis 10 Kohlenstoffatomen, Aryl mit 2 bis 10 Kohlenstoffatomen oder Aralkyl mit 3 bis 20 Kohlenstoffatomen.

3. Beschichtungszusammensetzung nach Anspruch 1 oder 2, wobei die von einem substituierten oder unsubstituierten 1,3-Butadien-Monomer abgeleitete Wiederholungseinheit dargestellt wird durch Formel (I), Formel (II) oder Formel (III):
-[CH₂-CX^{I}=CH-CH₂-] Formel (I)
-[CH₂-CX^{II}(CH=CH₂)-] Formel (II)
-[CH₂-CH(CX^{III}=CH₂)-] Formel (III)
wobei X^{I} H, Halogen oder Alkyl mit 1 bis 5 Kohlenstoffatomen ist; X" H, Halogen oder Alkyl mit 1 bis 5 Kohlenstoffatomen ist; und X^{III} Halogen oder Alkyl mit 1 bis 5 Kohlenstoffatomen ist.

4. Beschichtungszusammensetzung nach Anspruch 1 oder 2, wobei das Butadienpolymer eine erste und eine zweite von einem substituierten oder unsubstituierten 1,3-Butadien-Monomer abgeleitete Wiederholungseinheit enthält, wobei die erste Wiederholungseinheit dargestellt wird durch Formel (I) und die zweite Wiederholungseinheit dargestellt wird durch Formel (II):
-[CH₂-CX^{I}=CH-CH₂-] Formel (I)
-[CH₂-CX^{II}(CH=CH₂)-] Formel (II)
wobei X^{I} und X^{II} gleich und aus H, Halogen und Alkyl mit 1 bis 5 Kohlenstoffatomen ausgewählt sind.

5. Beschichtungszusammensetzung nach einem oder mehreren der Ansprüche 1 bis 4, wobei das Butadienpolymer eine oder mehrere weitere Wiederholungseinheiten enthält.

6. Beschichtungszusammensetzung nach Anspruch 5, wobei die weitere Wiederholungseinheit dargestellt wird durch Formel (IV):
-[CH₂-CHR^{a}-] Formel (IV)
wobei R^{a} ausgewählt ist aus Cyano, Alkyl, Aryl oder Aralkyl, wobei Alkyl, Aryl oder Aralkyl mit einem oder mehreren Substituenten substituiert sein können.

7. Beschichtungszusammensetzung nach Anspruch 1 oder 2, wobei das Butadienpolymer eine oder mehrere Wiederholungseinheiten, die von einem substituierten oder unsubstituierten, durch Formel (I), Formel (II) oder Formel (III) dargestellten 1,3-Butadien-Monomer abgeleitet sind, und eine oder mehrere weitere Wiederholungseinheiten, die durch Formel (IV) dargestellt werden, enthält:
-[CH₂-CX^{I}=CH-CH₂-] Formel (I)
-[CH₂-CX^{II}(CH=CH₂)-] Formel (II)
-[CH₂-CH(CX^{III}=CH₂)-] Formel (III)
-[CH₂-CHR^{a}-] Formel (IV)
wobei X^{I} H, Halogen oder Alkyl mit 1 bis 5 Kohlenstoffatomen ist; X" H, Halogen oder Alkyl mit 1 bis 5 Kohlenstoffatomen ist; und X^{III} Halogen oder Alkyl mit 1 bis 5 Kohlenstoffatomen ist; und R^{a} ausgewählt ist aus Cyano, Alkyl, Aryl oder Aralkyl, wobei Alkyl, Aryl oder Aralkyl mit einem oder mehreren Substituenten substituiert sein können.

8. Beschichtungszusammensetzung nach einem oder mehreren der Ansprüche 1 bis 7, wobei das Silazanpolymer eine Wiederholungseinheit M¹ enthält, die dargestellt wird durch Formel (1):
-[SiR¹R²-NR³-] Formel (1)
wobei R¹, R² und R³ gleich oder voneinander verschieden und unabhängig aus H, einer organischen Gruppe oder einer heteroorganischen Gruppe ausgewählt sind.

9. Beschichtungszusammensetzung nach Anspruch 8, wobei das Silazanpolymer ferner eine Wiederholungseinheit M² enthält, die dargestellt wird durch Formel (2):
-[SiR⁴R⁵-NR⁶-] Formel (2)
wobei R⁴, R⁵ und R⁶ gleich oder voneinander verschieden und unabhängig aus H, einer organischen Gruppe oder einer heteroorganischen Gruppe ausgewählt sind.

10. Beschichtungszusammensetzung nach einem oder mehreren der Ansprüche 1 bis 9,
wobei die Zusammensetzung ferner ein oder mehrere Lösungsmittel enthält.

11. Beschichtungszusammensetzung nach einem oder mehreren der Ansprüche 1 bis 10,
wobei die Zusammensetzung ferner einen oder mehrere Zusatzstoffe enthält.

12. Verfahren zur Herstellung eines beschichteten Gegenstandes, wobei das Verfahren die folgenden Schritte umfasst:
(a) Aufbringen einer Beschichtungszusammensetzung nach einem oder mehreren der Ansprüche 1 bis 11 auf eine Oberfläche eines Gegenstandes; und
(b) Härten der Beschichtungszusammensetzung, um einen beschichteten Gegenstand zu erhalten.

13. Verfahren nach Anspruch 12,
wobei die in Schritt (a) aufgebrachte Beschichtungszusammensetzung vorab bereitgestellt wird, indem man eine erste Komponente enthaltend ein Silazanpolymer mit einer zweiten Komponente enthaltend ein Butadienpolymer mischt, wobei das Silazanpolymer und das Butadienpolymer wie in einem oder mehreren der Ansprüche 1 bis 11 definiert sind.

14. Beschichteter Gegenstand, erhältlich durch das Verfahren nach Anspruch 12 oder 13.

15. Verwendung einer Beschichtungszusammensetzung nach einem oder mehreren der Ansprüche 1 bis 11 zum Bilden einer funktionellen Beschichtung auf einer Oberfläche eines Grundmaterials.

## Revendications

1. Composition de revêtement, comprenant :
(i) un polymère de silazane ; et
(ii) un polymère de butadiène ;
dans laquelle le polymère de butadiène comprend un ou plusieurs motifs répétitifs dérivés d'un monomère de 1,3-butadiène substitué ou non substitué et un ou plusieurs groupements fonctionnels choisis parmi -OH ou -Si(OR)₃, où R est choisi parmi H, alkyle, aryle ou aralkyle.

2. Composition de revêtement selon la revendication 1, dans laquelle R est choisi parmi H, alkyle ayant de 1 à 10 atomes de carbone, aryle ayant de 2 à 10 atomes de carbone ou aralkyle ayant de 3 à 20 atomes de carbone.

3. Composition de revêtement selon la revendication 1 ou 2, dans laquelle le motif répétitif dérivé d'un monomère de 1,3-butadiène substitué ou non substitué est représenté par la Formule (I), la Formule (II) ou la Formule (III) :
-[CH₂-CX^{I}=CH-CH₂-] Formule (I)
-[CH₂-CX^{II}(CH=CH₂)-] Formule (II)
-[CH₂-CH(CX^{III}=CH₂)-] Formule (III)
dans laquelle X^{I} est H, halogène ou alkyle ayant de 1 à 5 atomes de carbone ; X^{II} est H, halogène ou alkyle ayant de 1 à 5 atomes de carbone ; et X^{III} est halogène ou alkyle ayant de 1 à 5 atomes de carbone.

4. Composition de revêtement selon la revendication 1 ou 2, dans laquelle le polymère de butadiène comprend un premier et un deuxième motif répétitif dérivé d'un monomère de 1,3-butadiène substitué ou non substitué, où le premier motif répétitif est représenté par la Formule (I) et le deuxième motif répétitif est représenté par la Formule (II):
-[CH₂-CX^{I}=CH-CH₂-] Formule (I)
-[CH₂-CX^{II}(CH=CH₂)-] Formule (II)
dans laquelle X^{I} et X^{II} sont identiques et choisis parmi H, halogène et alkyle ayant de 1 à 5 atomes de carbone.

5. Composition de revêtement selon l'une ou plusieurs parmi les revendications 1 à 4, dans laquelle le polymère de butadiène comprend un ou plusieurs motifs répétitifs supplémentaires.

6. Composition de revêtement selon la revendication 5, dans laquelle le motif répétitif supplémentaire est représenté par la Formule (IV) :
-[CH₂-CHR^{a}-] Formule (IV)
dans laquelle R^{a} est choisi parmi cyano, alkyle, aryle ou aralkyle, où alkyle, aryle ou aralkyle peut être substitué par un ou plusieurs substituants.

7. Composition de revêtement selon la revendication 1 ou 2, dans laquelle le polymère de butadiène comprend un ou plusieurs motifs répétitifs dérivés d'un monomère de 1,3-butadiène substitué ou non substitué représenté par la Formule (I), la Formule (II) ou la Formule (III) et un ou plusieurs motifs répétitifs supplémentaires représentés par la Formule (IV) :
-[CH₂-CX^{I}=CH-CH₂-] Formule (I)
-[CH₂-CX^{II}(CH=CH₂)-] Formule (II)
-[CH₂-CH(CX^{III}=CH₂)-] Formule (III)
-[CH₂-CHR^{a}-] Formule (IV)
dans laquelle X^{I} est H, halogène ou alkyle ayant de 1 à 5 atomes de carbone ; X^{II} est H, halogène ou alkyle ayant de 1 à 5 atomes de carbone ; et X^{III} est halogène ou alkyle ayant de 1 à 5 atomes de carbone ; et R^{a} est choisi parmi cyano, alkyle, aryle ou aralkyle, où alkyle, aryle ou aralkyle peut être substitué par un ou plusieurs substituants.

8. Composition de revêtement selon l'une ou plusieurs parmi les revendications 1 à 7, dans laquelle le polymère de silazane comprend un motif répétitif M¹ représenté par la Formule (1) :
-[SiR¹R²-NR³-] Formule (1)
dans laquelle R¹, R² et R³ sont identiques ou différents les uns des autres et choisis indépendamment parmi H, un groupement organique, ou un groupement hétéro-organique.

9. Composition de revêtement selon la revendication 8, dans laquelle le polymère de silazane comprend en outre un motif répétitif M² représenté par la Formule (2) :
-[SiR⁴R⁵-NR⁶-] Formule (2)
dans laquelle R⁴, R⁵ et R⁶ sont identiques ou différents les uns des autres et choisis indépendamment parmi H, un groupement organique, ou un groupement hétéro-organique.

10. Composition de revêtement selon l'une ou plusieurs parmi les revendications 1 à 9,
la composition comprenant en outre un ou plusieurs solvants.

11. Composition de revêtement selon l'une ou plusieurs parmi les revendications 1 à 10,
la composition comprenant en outre un ou plusieurs additifs.

12. Méthode de préparation d'un article revêtu, la méthode comprenant les étapes suivantes :
(a) l'application d'une composition de revêtement selon l'une ou plusieurs parmi les revendications 1 à 11 à une surface d'un article ; et
(b) le durcissement de ladite composition de revêtement afin d'obtenir un article revêtu.

13. Méthode selon la revendication 12,
dans laquelle la composition de revêtement appliquée dans l'étape (a) est d'abord obtenue par le mélange d'un premier composant comprenant un polymère de silazane avec un deuxième composant comprenant un polymère de butadiène, où le polymère de silazane et le polymère de butadiène sont tels que définis selon l'une ou plusieurs parmi les revendications 1 à 11.

14. Article revêtu, pouvant être obtenu par la méthode selon la revendication 12 ou 13.

15. Utilisation d'une composition de revêtement selon l'une ou plusieurs parmi les revendications 1 à 11, pour la formation d'un revêtement fonctionnel sur une surface d'un matériau de base.
